# EUROPÄISCHE PATENTSCHRIFT

(11) **EP 2 603 966 B1**
(45) Veröffentlichungstag und Bekanntmachung des Hinweises auf die Patenterteilung: **21.10.2015**
(21) Anmeldenummer: 11746476.8
(22) Anmeldetag: 11.08.2011
(51) Int. Cl.: H02K 15/02, H02K 15/06

(54) **WERKSTÜCKHALTER FÜR EIN STATORPAKET**
WORKPIECE HOLDER FOR A STATOR PACKAGE
PORTE-PIÈCE POUR UN BLOC STATORIQUE

(30) Priorität: 12.08.2010 DE 102010034180
(43) Veröffentlichungstag der Anmeldung: 19.06.2013
(73) Patentinhaber: Otto Rist GmbH & Co. KG, 88255 Baienfurt (DE)
(72) Erfinder: HALDER, Hubert, 88263 Horgenzell (DE); WESSLE, Anton, 88284 Wopertswende (DE)
(74) Vertreter: Otten, Alexander
(86) Internationale Anmeldenummer: PCT/EP2011/004017
(87) Internationale Veröffentlichungsnummer: WO 2012/019766

(56) Entgegenhaltungen:
- JP-A- 5 030 712
- JP-A- 7 123 656
- JP-A- 56 019 363
- JP-A- 2007 006 677
- US-A- 5 542 456

## Beschreibung

Die Erfindung betrifft einen Werkstückhalter für die Herstellung eines Statorpakets für einen Elektromotor sowie ein Verfahren zur Herstellung eines Stators für einen Elektromotor.

Elektromotoren, welche als Läufer eine Anordnung von Permanentmagneten und als Stator ein den Läufer umgebendes Statorpaket mit Spulenwicklungen aufweisen, sind in einer Vielzahl von Ausführungsformen, beispielsweise als BLDC Motoren aus dem Stand der Technik bekannt. Zur Herstellung eines Statorpakets werden Stanzpaketierungen aus einzelnen ausgestanzten Blechsegmenten übereinander gestapelt, welche vorzugsweise einen zylindrischen Körper ausbilden. Auf der Innenwand des zylindrischen Körpers sind nutförmige Aufnahmen für Spulenwicklungen vorgesehen, in welche Isolationsaufnahmen eingelegt werden, um einen elektrischen Kontakt zwischen den später einzubringenden Spulenwicklungen und den Stanzblechen zu verhindern. Im Rahmen der bekannten Herstellungsverfahren werden die einzelnen Stanzblechsegmente aufeinander gelegt, in die Isolationsaufnahmen eingelegt und anschließend die Spulenwicklungen für die verschiedenen Magnetfeldphasen, vorzugsweise drei Spulenwicklungen für drei Magnetfeldphasen, in die Isolationsaufnahmen eingezogen. Nach Einbringung einer jeden Spulenwicklung wird die Isolationsaufnahme auf ihrer Innenseite durch eine Isolierfolie abgedeckt, wodurch die Spulenwicklung auch in der dafür vorgesehenen Nut fixiert wird. Zur Vermeidung einer möglichen Totpunktlage wird im Anschluss an die Einbringung aller Spulenwicklungen das gesamte Statorpaket in sich geschränkt und anschließend, vorzugsweise durch eine Schweißnaht fixiert. Nach diesen Arbeitsschritten ist die Herstellung des Statorpakets in ihrer Grundform abgeschlossen, wobei weitere Schritte, wie beispielsweise die Verschaltung von Anschlussleitungen, das Bandagieren überstehender Spulenwicklungen und das Prüfen bzw. Zertifizieren des Stators erfolgt.

Weiterhin ist aus der JP 2007 00 66 77 A ein Werkstückhalter für die Herstellung eines Statorpakets für einen Elektromotor, mit einer im Wesentlichen ebenen Halteplatte, mit einer Oberseite und einer Unterseite und einer diese Halteplatte zentrisch durchdringenden Werkstückaufnahme bekannt, wobei die Werkstückaufnahme in der Ebene der Halteplatte mit Hilfe des Motors drehbar gelagert ist.

Problematisch stellt sich oftmals der Arbeitsgang der nacheinander folgenden Einbringung der verschiedenen Spulenwicklungen dar, da hierbei, insbesondere bei automatisiertem Einbringen eine präzise und exakte Handhabung erforderlich ist. Ein dem gegenüber vollkommen unterschiedlicher Arbeitsgang ist durch das Schränken und das anschließende Verschweißen gegeben, wodurch es erforderlich ist, nach den bekannten Herstellungsverfahren aus dem Stand der Technik das Statorpaket als Werkstück umzuspannen, da einerseits eine Bearbeitung der Innenseite, nämlich beim Einziehen der Spulenwicklungen erwünscht ist, andererseits zum Schränken und Verschweißen eine Bearbeitung der Außenseite bzw. des Volumens angestrebt wird.

Die Erfindung hat sich daher der Aufgabe gestellt, die Herstellungsmöglichkeit eines Statorpakets für einen Elektromotor dahingehend zu verbessern, dass Arbeitsschritte eingespart werden können.

Ausgehend vom Oberbegriff des Anspruchs 1 wird diese Aufgabe durch die kennzeichnenden Merkmale des Anspruchs 1 gelöst. Ein erfindungsgemäßes Verfahren nach Anspruch 7 stellt ebenfalls eine Lösung der erfindungsgemäßen Aufgabe dar.

Der erfindungsgemäße Werkstückhalter für die Herstellung eines Statorpakets für einen Elektromotor weist eine im Wesentlichen ebene Halteplatte mit einer Oberseite und einer Unterseite auf. Zentrisch wird diese Halteplatte durch eine Werkstückaufnahme durchdrungen, wobei die Werkstückaufnahme Spannbacken umfasst. Diese Spannbacken sind dazu geeignet, das Statorpaket, bestehend aus der Stanzblechpaketierung und den in den Nuten angeordneten Isolationsaufnahmen, kraftschlüssig aufzunehmen. Die einzelnen aufeinander gelegten Bleche der Stanzblechpaketierung werden dabei vorerst durch die Isolationsaufnahmen, welche zuvor in der Nut eingespannt wurden, vorfixiert. Des Weiteren weist die Werkstückaufnahme im Bereich der Oberseite Stützfinger auf, welche zur formschlüssigen Unterstützung der in das Statorpaket eingelegten Isolationsaufnahmen dienen. Die Stützfinger können hierbei gegenüber der Oberfläche der Oberseite leicht nach unten versetzt ausgebildet sein, wobei wesentlich ist, dass sie über das oberste Blech der Stanzblechpaketierung greifen und die Isolationsaufnahmen fassen und abstützen. Erfindungsgemäß ist der Werkstückhalter dadurch gekennzeichnet, dass die Werkstückaufnahme in der Ebene der Halteplatte drehbar, vorzugsweise mit vorgegebenen Rasterpositionen drehbar gelagert ist.

Durch die drehbare Lagerung der Werkstückaufnahme kann im Rahmen einer Automatisierung möglich gemacht werden, dass unterschiedlichste Positionen des Statorpakets durch die Automatisierungseinrichtungen, beispielsweise durch die Einzugsautomatik für Spulenwicklungen einfach und zielsicher angesteuert werden können, ohne das ein Handhaben bzw. Umspannen des Statorpakets erfolgen muss.

Vorteilhafte Weiterbildungen sowie zweckmäßige Ausgestaltungen sind durch die Merkmale der abhängigen Ansprüche 2 bis 6 gegeben.

Das erfindungsgemäße Verfahren zur Herstellung eines Stators für einen Elektromotor, welcher unter Einsatz eines Werkstückträgers nach einem der Ansprüche 1 bis 6 erfolgt, bietet die Möglichkeit, sämtliche Verfahrensschritte, welche ab dem Einspannen der Stanzblechpaketierung in den Werkstückträger erfolgen müssen, ohne Entnahme des Statorpakets aus dem Werkstückträger durchzuführen.

Die einzelnen Merkmale der abhängigen Ansprüche sowie des erfindungsgemäßen Werkstückhalters sind in den folgenden Figuren des Ausführungsbeispiels näher erläutert. Für die erfindungsgemäßen Vorteile einer zweckmäßigen Ausgestaltung wird hierauf ausdrücklich Bezug genommen.

Es zeigen hierbei
- **Figur 1**: eine perspektivische Ansicht eines Werkstückhalters von seiner Oberseite,
- **Figur 2**: eine perspektivische Ansicht eines Werkstückhalters von seiner Unterseite,
- **Figur 3**: eine Detailansicht der Stützfinger mit gehaltenem, teilweise fertiggestellten Statorpaket,
- **Figur 4**: eine Detailansicht der Unterseite eines Werkstückhalters
- **Figur 5**: eine Ansicht der Oberseite des Werkstückhalters, insbesondere der Stützfingeranordnung.

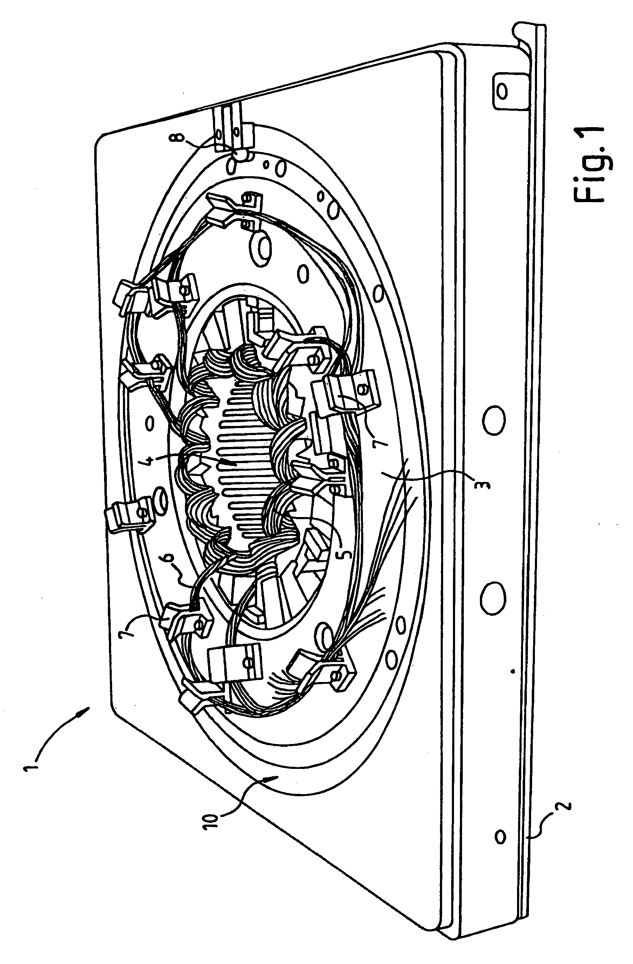

Im Einzelnen zeigt Figur 1 einen erfindungsgemäßen Werkstückhalter 1, welcher eine Halteplatte 2 und eine Werkstückaufnahme 3 umfasst. Die Werkstückaufnahme 3 ist hierbei zentrisch, die Halteplatte durchdringend angeordnet. Im Inneren der Werkstückaufnahme 3 ist ein teilweise fertiggestelltes Statorpaket 4 dargestellt, wobei vorliegend die erste Spulenwicklung 5 von 3 vorgesehenen Spulenwicklungen eingebracht wurde. Die Anschlussenden 6 der Spulenwicklung 5 sind vorliegend in Halteklammern 7 angeordnet, sodass sich die Anschlussenden 6 in einem ordentlich aufgeräumten Zustand befinden, und die weitere Bearbeitung, beispielsweise beim Einbringen einer weiteren Spulenwicklung nicht behindern können. Die Werkstückaufnahme 3 ist in der Halteplatte 2 drehbar ausgeführt, wobei vorliegend ein Rastelement 8 zur Arretierung vorgesehen ist. Das Rastelement 8 kann hierbei manuell oder automatisch bedient werden. Vorliegend dargestellt weist der erfindungsgemäße Werkstückhalter 2 auf seiner Oberseite 10 außer den Halteklammern 7 keine wesentlichen Überstände auf, insbesondere ist das Statorpaket 4 bündig mit der Oberseite 10 oder darunter angeordnet.

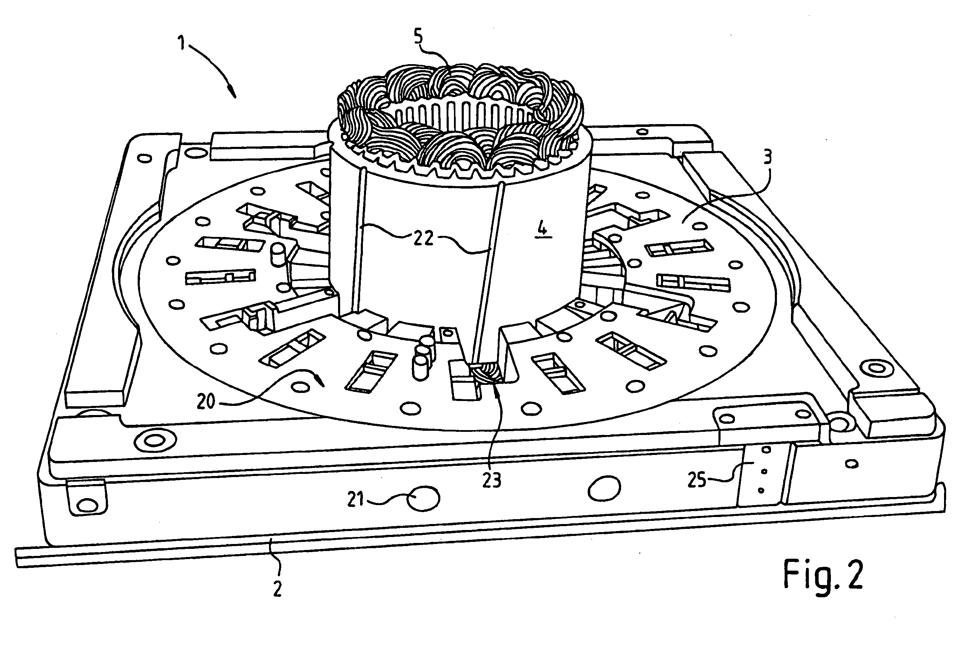

Figur 2 zeigt eine um hundertachtzig Grad gedrehte Darstellung des erfindungsgemäßen Werkstückhalters 1 mit darin angeordnetem Statorpaket 4, sodass nunmehr die Unterseiten 20 des Werkstückhaltes 1 und der Werkstückaufnahme 3 dargestellt sind. Die Halteplatte 2 weist Aufnahmen für eine Rotationsvorrichtung 21 auf, mit welcher eine derartige Drehung im Rahmen des Herstellungsprozesses automatisch ausgeführt werden kann.

Das Statorpaket 4 ist vorliegend mit allen eingebrachten Spulenwicklungen 5 versehen, und ein Schränkvorgang wurde ausgeführt, was sich durch die leicht schräg verlaufenden Nuten im Inneren des Statorpakets äußert. Das Statorpaket 4 ist an seiner Außenseite über Schweißnähte 22 fixiert, sodass die geschränkte Position der Spulenwicklungen erhalten bleibt.

Der erfindungsgemäße Werkstückhalter 1 weist an der Werkstückaufnahme 3 Ausnehmungen 23 auf, welche mit den Schweißnähten 22 in ihrer Position zumindest im Bereich der Werkstückaufnahme 3 überdeckend übereinstimmen. Die Ausnehmungen 23 erlauben einen Schweißvorgang, beispielsweise mittels eines Lasers bei welchem über die komplette Höhe der Stanzblechpaketierung des Statorpakets 4 eine Schweißnaht angebracht wird, ohne dass das Statorpaket 4 aus dem Werkstückträger 1 entnommen werden muss.

Im Bereich der Halteplatte 2 des Werkstückhalters 1 ist an einer Seite ein Datenspeicher 25 angeordnet, welcher als Lese-Schreibspeicher ausgestattet sein kann. Im Rahmen einer automatisierten oder halbautomatisierten Fertigung kann in diesem Speicher jeder einzelne Herstellungsschritt hinterlegt werden, sodass eine permanente Verfolgung des aktuellen Fertigungszustandes ermöglicht wird. Zusätzlich kann, da das Statorpaket nie aus dem Werkstückträger 1 entnommen wird, die Fertigung bis zur Fertigstellung eindeutig und fehlerfrei identifiziert werden, um beispielsweise die Serienfertigung exakt zu protokollieren.

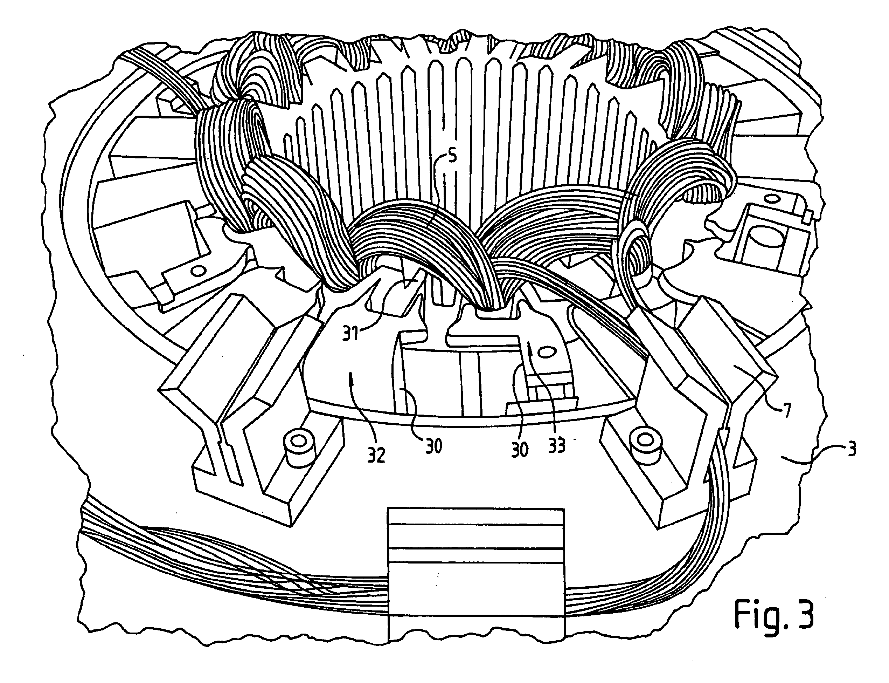

Figur 3 zeigt eine Detailansicht der Oberseite 10 eines erfindungsgemäßen Werkstückhalters 1 im Bereich der Werkstückaufnahme 3. Im Detail sind die Stützfinger 30 zu erkennen, welche die Isolationsaufnahmen 31 für die Spulenwicklungen 5 stützend umgreifen. Neben flächigen Stützfingern 32 sind auch Stützfinger an einem Ausleger 33 vorgesehen. Die Stützfinger an einem Ausleger sind an denjenigen Stellen angeordnet, welche mit den Ausnehmungen 23 auf der Unterseite der Werkstückaufnahme 3 übereinstimmen. Die Stützfinger mit Ausleger 33 sind vornehmlich aus Kupfer oder mit Kupferbestandteilen hergestellt, da auf diese Weise ein Schweißlaser über die Stanzblechpaketierung hinaus bis zum Stützfinger geführt werden kann, um so eine gleichmäßige und vollständige Verbindung der Stanzblechpaketierung herzustellen. Erfindungsgemäß ist jedoch jedes Material für derartige Stützfinger umfasst, welches ein entsprechendes Überstreichen mit einem Schweißlaser erlaubt.

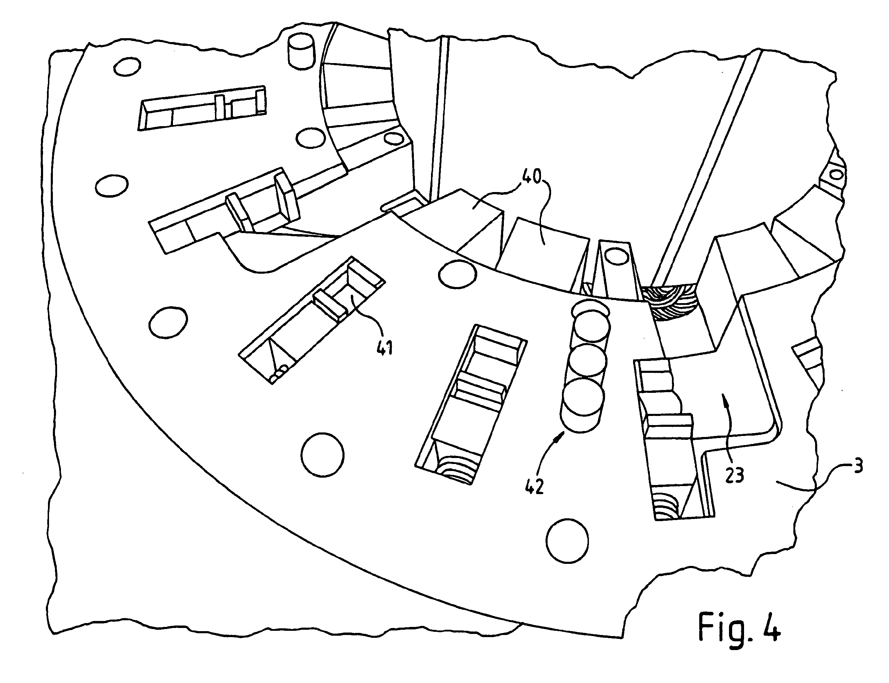

Figur 4 zeigt eine Detailansicht einer Unterseite 20 des erfindungsgemäßen Werkstückhalters 1, wobei vorliegend die Werkstückaufnahme 3 im Detail dargestellt ist. Die Werkstückaufnahme 3 weist das Statorpaket kraftschlüssig aufnehmende Spannbacken 40 auf, welche über ein Bedienmittel 41, vorliegend als Linearschieber ausgebildet, gegen einen Federballast lösbar sind. Des Weiteren weist die Werkstückaufnahme 3 Positionsrastmittel 42 auf, welche die Drehbarkeit der Werkstückaufnahme 3 im Werkstückhalter 1 beschränken können und zur exakten Ausrichtung einer Position dienen. Die Positionsrastmittel können jedoch auch anderweitig ausgestaltet sein, insbesondere können diese auch durch entsprechend zur Automatisierung passende Rastmittel gebildet werden.

Die Werkstückaufnahme 3 weist auf ihrer Unterseite die Ausnehmung 23 auf, welche zur Durchführung eines Schweißlasers benötigt wird.

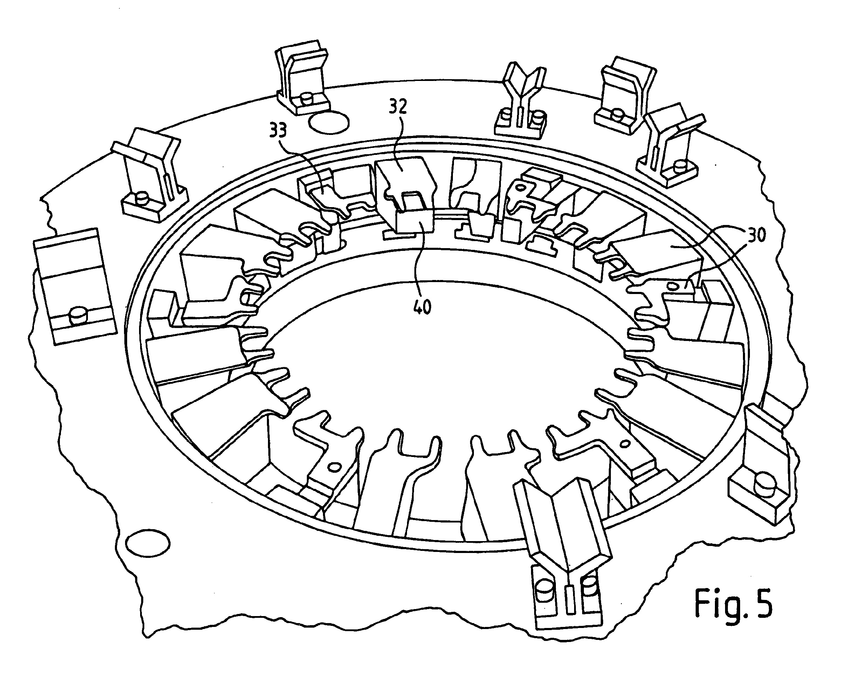

Figur 5 zeigt eine Darstellung einer Werkstückaufnahme 3 eines erfindungsgemäßen Werkstückhalters 1 ohne darin eingelegtes Statorpaket. Die Spannbacken 40, welche vorliegend unterhalb der Stützfinger 30, insbesondere unterhalb der flächigen Stützfinger 32 sowie der Auslegerstützfinger 33 angeordnet sind, ergreifen kraftschlüssig von außen die Stanzblechpaketierung und halten diese in der Werkstückaufnahme.

Die Erfindung ist jedoch nicht auf das dargestellte Ausführungsbeispiel beschränkt, sie umfasst vielmehr all diejenigen Ausgestaltungen, welche vom erfindungswesentlichen Gedanken Gebrauch machen.

### Bezugszeichenliste:

- 1: Werkstückhalter
- 2: Halteplatte
- 3: Werkstückaufnahme
- 4: Statorpaket
- 5: Spulenwicklung
- 6: Anschlussenden
- 7: Halteklammern
- 8: Rastelement
- 10: Oberseite
- 20: Unterseite
- 21: Aufnahme für eine Rotationsvorrichtung
- 22: Schweißnaht
- 23: Ausnehmung
- 25: Datenspeicher
- 30: Stützfinger
- 31: Isolationsaufnahme
- 32: flächiger Stützfinger
- 33: Auslegerstützfinger
- 40: Spannbacken
- 41: Bedienmittel
- 42: Positionsrastmittel

## Patentansprüche

1. Werkstückhalter (1) für die Herstellung eines Statorpakets (4) für einen Elektromotor, mit einer im Wesentlichen ebenen Halteplatte (2), mit einer Oberseite (10) und einer Unterseite (20) und einer diese Halteplatte (2) zentrisch durchdringenden Werkstückaufnahme (3), wobei die Werkstückaufnahme (3) in der Ebene der Halteplatte (2) drehbar, vorzugsweise mit vorgegebenen Rasterpositionen drehbar gelagert ist, **dadurch gekennzeichnet, dass** die Werkstückaufnahme (3) Spannbacken (40) umfasst, welche das Statorpaket (4) kraftschlüssig aufnehmen und wobei die Werkstückaufnahme (3) im Bereich der Oberseite (10) Stützfinger (30) aufweist, welche zur formschlüssigen Unterstützung einer in das Statorpaket (4) eingelegten Isolationsaufnahme (31) für Spulenwicklungen (5) vorgesehen sind und wobei auf der Unterseite (20) der Werkstückaufnahme (3) zwischen den Spannbacken (40) zumindest teilweise Ausnehmungen (23) angeordnet sind, um Manipulationen, nämlich eine Schränkung und einen Laserschweißvorgang am Statorpaket (4) vorzunehmen.

2. Werkstückhalter (1) nach Anspruch 1, **dadurch gekennzeichnet, dass** auf der Oberseite (10) der Werkstückaufnahme (3) Haltemittel, vorzugsweise Halteklammern (7) für die Anordnung von Anschlussleitungen von Spulenwicklungen (5) vorgesehen sind.

3. Werkstückträger (1) nach einem der vorangegangenen Ansprüche, **dadurch gekennzeichnet, dass** die Stützfinger (30) beweglich sind und/oder zumindest ein Teil der Stützfinger (30) zumindest teilweise aus Kupfer hergestellt ist.

4. Werkstückträger (1) nach einem der vorangegangenen Ansprüche, **dadurch gekennzeichnet, dass** Aufnahmen (21) für eine Rotationsvorrichtung für eine Rotation um die Ebene der Halteplatte (2) vorgesehen sind.

5. Werkstückträger (1) nach einem der vorangegangenen Ansprüche, **dadurch gekennzeichnet, dass** Mittel zur Speicherung, Bereitstellung und/oder Anpassung von Daten am Werkstückträger angeordnet sind.

6. Verfahren zur Herstellung eines Stators für einen Elektromotor, wobei folgende Schritte umfasst sind:
a) Anordnen einer Stanzblechpaketierung zur Bereitstellung eines Statorpakets (4)
b) Einbringen von Isolationsaufnahmen (31) für Spulenwicklungen (5) in Nuten im Statorpaket (4)
c) Aufnehmen des Statorpakets (4) in einen Werkstückträger (1) nach einem der Ansprüche 1 bis 6
d) Wickeln von mindestens 2 vorzugsweise 3 Spulenpaketen (4)
e) Einbringen der Spulenpakete (4) in die Isolationaufnahmen (31) und Verschließen der Isolationsaufnahmen (31) durch Isolationsfolien
f) Schränken der Stanzblechpaketierung
g) Verschweißen der Stanzblechpaketierung
**dadurch gekennzeichnet, dass**
sämtliche Verfahrensschritte d) bis g) ohne Entnahme aus dem Werkstückträger erfolgen.

## Claims

1. A workpiece holder (1) for producing a stator package (4) for an electrical motor, having a substantially level holding plate (2), having an upper face (10) and a lower face (20) and a workpiece receptacle (3) penetrating said holding plate (2) centrally, wherein the workpiece receptacle (3) rotatable in the plane of the holding plate (2) is rotatably mounted preferably having predefined locking positions, **characterized in that** the workpiece receptacle (3) comprises clamping jaws (40), which receive the stator package (4) in a force-closed manner and wherein the workpiece receptacle (3) has support fingers (30) in the region of the upper face (10), which are provided for supporting an isolation receptacle (31) for coil windings (5) which is laid in the stator package (4) in a form-fitting manner and wherein recesses (23) are arranged on the lower face (20) of the workpiece receptacle (3) between the clamping jaws (40) at least partially, in order to carry out manipulations, specifically, an offset and a laser welding process on the stator package (4).

2. A workpiece holder (1) according to claim 1, **characterized in that** on the upper face (10) of the workpiece receptacle (3) holding means, preferably holding brackets (7) are provided for the arrangement of connection cables of the coil windings (5).

3. A workpiece carrier (1) according to one of the preceding claims, **characterized in that** the support fingers (30) are movable and/or at least a part of the support fingers (30) is produced at least partially from copper.

4. A workpiece carrier (1) according to one of the preceding claims, **characterized in that** holding fixtures (21) are provided for a rotation device for a rotation about the plane of the holding plate (2).

5. A workpiece carrier (1) according to one of the preceding claims, **characterized in that** means for the storage, provision and/or adjustment of data are arranged on the workpiece carrier.

6. A method for producing a stator for an electrical motor, wherein the following steps are included:
a) Arrangement of a punched sheet metal packaging for the provision of a stator package (4)
b) Installation of isolation receptacles (31) for coil windings (5) in grooves in the stator package (4)
c) Accommodation of the stator package (4) in a workpiece carrier (1) according to one of claims 1 to 6
d) Winding of at least 2 preferably 3 coil packages (4)
e) Installation of the coil packages (4) in the isolation receptacle (31) and closure of the isolation receptacle (31) by isolation foils
f) Offsetting of the punched sheet metal packaging
g) Welding of the punched sheet metal packaging
**characterized in that**
all procedural steps d) to g) take place without removal from the workpiece carrier.

## Revendications

1. Porte-pièce (1) pour la fabrication d'un ensemble de stator (4) pour un moteur électrique, avec une plaque de maintien (2) globalement plate, avec un côté supérieur (10) et un côté inférieur (20) et un logement de pièce (3) traversant de manière centrale cette plaque de maintien (2), le logement de pièce (3) étant logé de manière rotative dans le plan de la plaque de maintien (2), de préférence de manière rotative avec des positions crantées prédéterminées, **caractérisé en ce que** le logement de pièce (3) comprend des mâchoires de serrage (40) qui maintiennent l'ensemble de stator (4) par force et le logement de pièce (3) comprenant, au niveau du côté supérieur (10) des taquets d'appui (30) qui sont prévus pour un appui par complémentarité de forme d'un logement isolant (31) pour des enroulements de bobines (5), inséré dans l'ensemble de stator (4) et, sur le côté inférieur (20) du logement de pièce (3), entre les mâchoires de serrage (40), se trouvent aux partiellement des évidements (23) permettant d'effectuer des manipulations, par exemple un vrillage et un processus de soudure au laser sur l'ensemble de stator (4).

2. Porte-pièce (1) selon la revendication 1, **caractérisé en ce que**, sur le côté supérieur (10) du logement de pièce (3), sont prévus des moyens de maintien, de préférence des agrafes de maintien (7) pour la disposition de conduites de raccordement d'enroulements de bobines (5).

3. Porte-pièce (1) selon l'une des revendications précédentes, **caractérisé en ce que** les taquets d'appui (30) sont mobiles et/ou au moins une partie des taquets d'appui (30) sont constitués au moins partiellement de cuivre.

4. Porte-pièce (1) selon l'une des revendications précédentes, **caractérisé en ce que** des logements (21) sont prévus pour un dispositif de rotation pour une rotation autour du plan de la plaque de maintien (2).

5. Porte-pièce (1) selon l'une des revendications précédentes, **caractérisé en ce que** des moyens de stockage, de mise à disposition et/ou d'adaptation de données sont disposés sur le porte-pièce.

6. Procédé de fabrication d'un stator pour un moteur électrique, comprenant les étapes suivantes :
a) disposition d'un assemblage de tôles de découpe pour la création d'un ensemble stator (4)
b) insertion de logements isolants (31) pour des enroulements de bobines (5) dans des rainures dans l'ensemble de stator (4)
c) logement de l'ensemble de stator (4) dans un porte-pièce (1) selon l'une des revendications 1 à 6
d) enroulement d'au moins 2, de préférence 3, ensembles de bobines (4)
e) insertion des ensembles de bobines (4) dans les logements isolants (31) et scellement des logements isolants (31) par des films isolants.
f) vrillage de l'assemblage de tôles de découpe
g) soudure de l'assemblage de tôles de découpe
**caractérisé en ce que**
toutes les étapes du procédé d) à g) ont lieu sans retrait hors du porte-pièce.
